# EUROPÄISCHE PATENTSCHRIFT

(11) **EP 2 689 949 B1**
(45) Veröffentlichungstag und Bekanntmachung des Hinweises auf die Patenterteilung: **13.01.2016**
(21) Anmeldenummer: 12005433.3
(22) Anmeldetag: 26.07.2012
(51) Int. Cl.: B60J 10/00

(54) **Verfahren zur Anordnung eines Elastomerprofils an der Stirnseite einer Tür oder eines Türportals eines öffentlichen Personenverkehrsmittels**
Procédé d'agencement d'un profil d'élastomère sur la face frontale d'une porte ou d'un portail d'un moyen public de transport de personnes
Method for assembling an elastomer profile on the front side of a door or a door portal for a public passenger vehicle

(43) Veröffentlichungstag der Anmeldung: 29.01.2014
(73) Patentinhaber: Hübner GmbH & Co. KG, 34123 Kassel (DE); Gebr. Bode GmbH & Co. KG, 34123 Kassel (DE)
(72) Erfinder: Arend, Ulrich, 34576 Homberg-Dickershausen (DE)
(74) Vertreter: Walther, Walther & Hinz GbR

(56) Entgegenhaltungen:
- DE-A1- 10 044 071
- DE-U1- 20 311 653

## Beschreibung

Die Erfindung betrifft ein Verfahren zur Anordnung eines Elastomerprofils an der Stirnseite einer Tür oder eines Türportals eines öffentlichen Personenverkehrsmittels, wobei das Profil mindestens eine Fußleiste zur Aufnahme durch eine Schiene der Tür oder des Türportals aufweist, und wobei das Profil sich längs des Profils erstreckend mindestens eine Kammer umfasst.

Aus der DE 10044071 A1 ist ein Dichtungssystem für eine Tür, z.B. eines Busses, bekannt. Dieses Dichtungssystem umfasst eine an der Portalleiste eines Türrahmens angeordnete Rahmendichtung mit einer der Tür zugerichteten Hohlkammer. Die Tür selbst besitzt eine Türdichtung mit einer Dichtfläche, die in Eingriff mit der Hohlkammer des Türrahmens bringbar ist, wenn die Hohlkammer mit Druck beaufschlagt wird.

Aus einem Elastomer ausgebildete Profile zur Anordnung an einer Tür oder einem Türportal sind aus dem Stand der Technik hinreichend bekannt. Derartige Profile dienen dazu, einen möglichen Spalt zwischen Türrahmen und Tür bzw. auch zwischen zwei aufeinander zulaufenden Türen gegen äußere Einflüsse abzudichten. Häufig sind derartige aus einem Elastomer hergestellte Profile als Fingerschutzprofile ausgebildet, wie sie beispielsweise aus der EP 1 575 068 bekannt sind. Die Aufgabe solcher Fingerschutzprofile besteht darin, beim Schließvorgang der Tür dafür zu sorgen, dass wenn sich ein Gegenstand im Bereich des Fingerschutzprofils befindet, der Schließvorgang der Tür reversiert wird, sodass sichergestellt ist, dass weder Personen noch Gegenstände durch die Tür eingeklemmt werden.

Für die Befestigung eines solchen Elastomerprofils an einer Tür oder einem Türportal weist die Tür oder das Portal eine im Querschnitt C-förmige Schiene auf, wobei in die Schiene das Elastomerprofil mit der Fußleiste eingeschoben wird. Dieser Montagevorgang ist mit einem erheblichen Kraftaufwand verbunden. Dies gilt selbst dann, wenn das Elastomerprofil an den Stellen oder Flächen, die mit der C-förmigen Schiene unmittelbar in Berührung gelangen, mit einem Gleitmittel eingestrichen wird. Insbesondere besteht die Gefahr, dass beim Einschieben die mit der Montage beschäftigten Personen von dem Profil abrutschen, insbesondere wenn dies mit einem Gleitmittel eingestrichen ist, und sich hierbei den Unterarm an der C-förmigen Schiene aufreißen.

Die der Erfindung zugrunde liegende Aufgabe besteht demzufolge darin, ein Verfahren der eingangs genannten Art bereitzustellen, durch das die Montage eines Elastomerprofils an der Stirnseite einer Tür erleichtert wird, mit dem Ziel der Verminderung von Arbeitsunfällen beim Einschieben des Elastomerprofils in die Schiene einer Tür oder eines Türportals.

Das Montageverfahren zur Anordnung des Profils an der Stirnseite der Tür oder eines Portalrahmen zeichnet sich erfindungsgemäß dadurch aus, dass beim Einschieben der Fußleiste in die Schiene durch Beaufschlagung der mindestens einen Kammer mit Unterdruck die Reibung zwischen Profil und Schiene-der Tür oder des Türportals, d. h. während des Einschubvorganges, vermindert ist. Betrachtet man nach einer ersten Variante den Fall, dass die mindestens eine mit Unterdruck beaufschlagbare Kammer sich innerhalb des Profils befindet, und zwar im Bereich der Wandung, die die Fußleiste aufnimmt, dann wird dann, wenn diese Kammer evakuiert ist, sich die Wandung, die die Fußleiste aufnimmt, zu beiden Seiten der Fußleiste von der Wandung der C-förmigen Schiene weg verschwenken, weil sich die Kammer unter Unterdruck zusammenzieht. Dies bewirkt eine signifikante Verminderung der Reibung zwischen Profil und Schiene.

Zusätzlich oder alternativ kann vorgesehen sein, mindestens eine in der Fußleiste angeordnete Kammer mit Unterdruck zu beaufschlagen, um durch Zusammenziehen dieser Kammer und damit einhergehend durch eine Verminderung der Anlagekräfte zwischen Fußleiste und Schiene die Reibung zwischen Fußleiste und Schiene zu vermindern. Es wird darauf hingewiesen, dass die Fußleiste durch eine mittig verlaufende Kerbe in zwei Fußleistenelemente teilbar ist. Durch die Anordnung einer Kammer anstelle der Kerbe kann nun erreicht werden, dass die Fußleistenelemente, die an der Innenseite der C-förmigen Schiene anliegen, sich bei Unterdruck in der Kammer zusammenziehen, und so zu der weiteren Verminderung der Reibung zwischen Schiene und Profil beitragen.

Denkbar ist aber ebenfalls, wenn in beiden Fußleistenelementen im oberen Bereich der Kerbe jeweils eine evakuierbare Kammer vorgesehen ist, wobei sich in diesem Fall dann bei Zusammenziehen der beiden Kammern durch Evakuierung die beiden Fußleistenelemente sich im Bereich der Kerbe aufeinander zu bewegen werden, und mithin die Fußleistenelemente endseitig kaum oder gar keinen Kontakt mit dem entsprechenden Schenkel der Schiene, insbesondere der C-förmigen Schiene beim Einschubvorgang aufweisen.

Durch die Anordnung einer mit Unterdruck beaufschlagbaren, d. h. evakuierbaren Kammer im Profil wird erreicht, dass sich die Kammer und mithin das Profil im Bereich der Kammer zusammenziehen. Durch eine geeignete Anordnung mindestens einer Kammer vorzugsweise jedoch von mehreren evakuierbaren Kammern, die sich über die Länge des Profils erstrecken, kann nun erreicht werden, dass sich an den Stellen, an denen das Profil im nicht evakuierten Zustand auf oder an der Schiene anliegt, das Profil im evakuierten Zustand von der Schiene zumindest partiell abgehoben wird und insofern die Reibung zwischen dem Profil einerseits und der Schiene andererseits vermindert oder sogar gänzlich aufgehoben wird. Das heißt, die Kraft, mit der das Profil auf der Schiene anliegt, wird vermindert oder sogar gänzlich aufgehoben.

Im Übrigen ist vorgesehen, dass im Bereich der mindestens einen Wandung des Profils, die die Fußleiste aufnimmt, die mindestens eine Kammer angeordnet ist, die mit Unterdruck beaufschlagbar ist. Das heißt, die mindestens eine Kammer befindet sich innerhalb des Profils. Üblicherweise ist es bei der Montage eines solchen Elastomerprofils so, dass die Wandung des Profils, die die Fußleiste aufnimmt, unmittelbar auf der Oberseite der C-förmigen Schiene aufliegt. Hierdurch entstehen erhebliche Reibungskräfte. Dadurch nun, dass für die Montage durch die Beaufschlagung der Kammer mit Unterdruck die beiden Wändungsflanken zu beiden Seiten der Fußleiste von der die Fußleiste aufnehmenden Schiene weggeschwenkt werden, wird nun die Reibung beim Einschieben der Fußleiste in die C-förmige Schiene erheblich vermindert. Das zuvor beschriebene Abheben der Wandung zu beiden Seiten der Fußleiste wird noch dadurch begünstigt, dass die Kammer auf der Außenwandung etwa mittig eine sich längs der Kammer erstreckende Querschnittsverminderung aufweist. Insbesondere ist in diesem Zusammenhang vorgesehen, dass die Innenseite der Außenwandung eine Wandungskerbe zur Querschnittsverminderung aufweist. Diese Wandungskerbe sorgt dafür, dass an dieser Stelle die Wandung einknickt und hierdurch die Wandungsflanken der Wandung, die die Fußleiste aufnimmt, von der C-förmigen Schiene wegschwenken. Die Außenwandung ist hierbei die Wandung der Kammer, die auf die Türaußen- oder Türinnenseite zugerichtet ist.

Weiterhin ist vorgesehen, dass in der Fußleiste mindestens eine Kammer angeordnet ist, die derart ausgebildet ist, dass sie mit Unterdruck beaufschlagbar ist. Zusätzlich oder alternativ zu der Kammer, durch die im evakuierten Zustand bewirkt wird, dass die Wandung von der Oberseite der C-förmigen Schiene wegverschwenkt wird, kann durch die Anordnung mindestens einer weiteren zweiten evakuierten Kammer in der Fußleiste erreicht werden, dass auch dieser Bereich Kraft vermindernd an den entsprechenden Flächen der Schiene während der Montage anliegt. Dies mit der Folge, dass die Reibung so weit vermindert wird, dass das Profil mit der Fußleiste ohne größere Kraftanstrengung in die entsprechende Schiene eingeschoben werden kann.

Vorteilhaft ist, dass das Profil im Querschnitt in etwa rechteckig ausgebildet ist, wobei die von der Wandung abstehende Fußleiste auf mindestens einer Seite einen Hinterschnitt im Bereich der Wandung des Profils aufweist. Durch die zuvor beschriebene Ausbildung des Profils mit der Fußleiste wird erreicht, dass durch die C-förmige Schiene der Tür oder des Türportals das Profil mit seiner Fußleiste formschlüssig aufnehmbar ist.

Weiterhin ist die mindestens eine Kammer, die sich parallel zur Fußleiste erstreckt, verschließbar. Dies kann beispielsweise dadurch geschehen, dass ein Verschlussstopfen auf die beiden Enden des Profils aufgesetzt wird, und hierdurch die mit Unterdruck zu beaufschlagende Kammer abgesperrt ist, oder aber die Enden des Profils werden im Bereich der Kammer z. B. verklebt.

An der mindestens einen Kammer sind vorzugsweise Mittel anbringbar, mit deren Hilfe die Kammer mit Unterdruck beaufschlagt werden kann. Dies kann beispielsweise eine entsprechende Saugeinrichtung, z. B. eine Saugpumpe, sein. Zum Anschluss ist vorteilhaft ein Ventil vorgesehen. Denkbar ist aber auch, lediglich eine Öffnung in der Kammer vorzusehen, durch die ein Schlauch geschoben wird, an dem eine Pumpe als Saugeinrichtung anbringbar ist. Zum Verschließen der Enden des Profilkörpers können Verschlussstopfen vorgesehen sein, die im Bereich der Kammern das Ventil zum Anschluss einer Saugpumpe aufweisen.

Als vorteilhaft hat sich herausgestellt, wenn die Fußleiste zur Bildung zweier Fußleistenelemente eine längs verlaufende Kerbe aufweist, sodass die Fußleistenelemente, obwohl an der Innenseite der C-förmigen Schiene anliegend, sich dennoch von der Schiene wegbiegen können, um so das Einschieben in die Schiene zu erleichtern.

In diesem Zusammenhang hat sich insbesondere als vorteilhaft herausgestellt, wenn die mindestens eine mit Unterdruck beaufschlagbare Kammer der Fußleiste dadurch gebildet wird, dass die Kerbe als geschlossenerHolraum ausgebildet ist. Denn durch die Evakuierung der Kammer in diesem Bereich, also im Bereich der früheren Kerbe, wird erreicht, dass die Fußleistenelemente sich aufeinander zubewegen und somit nur mit geringer Kraft an den entsprechenden Innenseiten der Schenkel der C-förmigen Schiene anliegen, wenn sie überhaupt noch dort anliegen.

Des Weiteren hat sich als vorteilhaft herausgestellt, wenn der Querschnitt der mindestens einen Kammer in dem Profil sich in Richtung auf die Fußleiste zu verjüngt. Insbesondere kann beispielsweise die Kammer im Querschnitt dreieckförmig ausgebildet sein, um das Abklappen der Wandung zu beiden Seiten der Fußleiste zu begünstigen.
Es wurde bereits darauf hingewiesen, dass das Profil als Fingerschutzprofil ausgebildet sein kann. Zu diesem Zweck weist das Profil des Fingerschutzprofils auf der der Fußleiste gegenüberliegenden Wandlung mindestens eine Kammer zur Aufnahme eines Schaltgliedes z. B. einer Schaltleiste auf.

Sowohl ein einfaches Elastomerprofil als auch ein Elastomerprofil in Form eines Fingerschutzprofils zeigen auf der der Fußleiste gegenüberliegenden Wandung mindestens eine, vorzugsweise jedoch zwei aufeinander zugerichtete Dichtlippen, die dafür sorgen, dass Spritzwasser nicht in das Innere des Fahrzeugs gelangen kann.

Anhand der Zeichnungen wird die Erfindung nachstehend beispielhaft näher erläutert.
- Fig.1: zeigt im Schnitt ein männliches und ein weibliches Fingerschutzprofil angeordnet an einem Türportal und einer Tür oder zwischen zwei Türen;
- Fig.2: zeigt ein männliches Fingerschutzprofil in vergrößerter Darstellung;
- Fig. 3: zeigt eine Darstellung des männlichen Fingerschutzprofils gemäß Fig. 2, wobei die beiden Kammern des Fingerschutzprofils mit Unterdruck beaufschlagt sind;
- Fig. 4: zeigt den Verschlussstopfen mit dem Ventil;
- Fig. 5: zeigt das Profil gemäß Fig. 2 mit einer in der Fußleiste angeordneten, mit Unterdruck beaufschlagbaren Kammer;
- Fig. 6: zeigt eine Darstellung gemäß Fig. 5, wobei die Kammer im Bereich der Fußleiste mit Unterdruck beaufschlagt ist.

Das männliche Fingerschutzprofil 1 und das weibliche Fingerschutzprofil 10 unterscheiden sich im Wesentlichen nur dadurch, dass das männliche Fingerschutzprofil 1 im Bereich des Übergangs zum weiblichen Fingerschutzprofil 10 eine vorstehende Kammer 2 aufweist, die der Aufnahme einer Schaltleiste 4 dient. Darüber hinaus weist sowohl das männliche Fingerschutzprofil 1 als auch das weibliche Fingerschutzprofil 10 am freien Ende im Seitenbereich jeweils eine Dichtlippe 5, 15 auf, die in Richtung zum Zentrum des Fingerschutzprofils zu, abgewinkelt ist. Diese Dichtlippen 5, 15 verhindern den Eintritt von Spritzwasser in das Innere des Fahrzeugs.

Sowohl das männliche als auch das weibliche Fingerschutzprofil besitzen im vorliegenden Fall mehrere Kammern 6, 16, die sich parallel zur Längsachse des jeweiligen Fingerschutzprofils 7, 17 als männliches oder weibliches Fingerschutzprofil erstrecken. Sowohl das männliche als auch das weibliche Fingerschutzprofil zeigen darüber hinaus jeweils eine Fußleiste 9, 19, wobei eine jede Fußleiste 9, 19 zwei parallel zueinander verlaufende Fußleistenelemente 9a, 19a aufweist, wobei die beiden parallel zueinander verlaufenden Fußleistenelemente 9a, 19a durch die mittig in der Fußleiste angeordnete Kerbe 9b, 19b gebildet werden. Die Fußleiste 9, 19 besitzt beidseitig einen Hinterschnitt 9c, 19c zur Aufnahme durch die im Querschnitt C-förmige Schiene 25 in dem Türblatt 31 der Tür 30. Die Wandung 3, 13 des jeweiligen Profils 7, 17, dass die Fußleiste 9, 19 aufnimmt, liegt sowohl an der C-förmigen Schiene 25 an, als auch an dem Türblatt 31 der Tür 30.

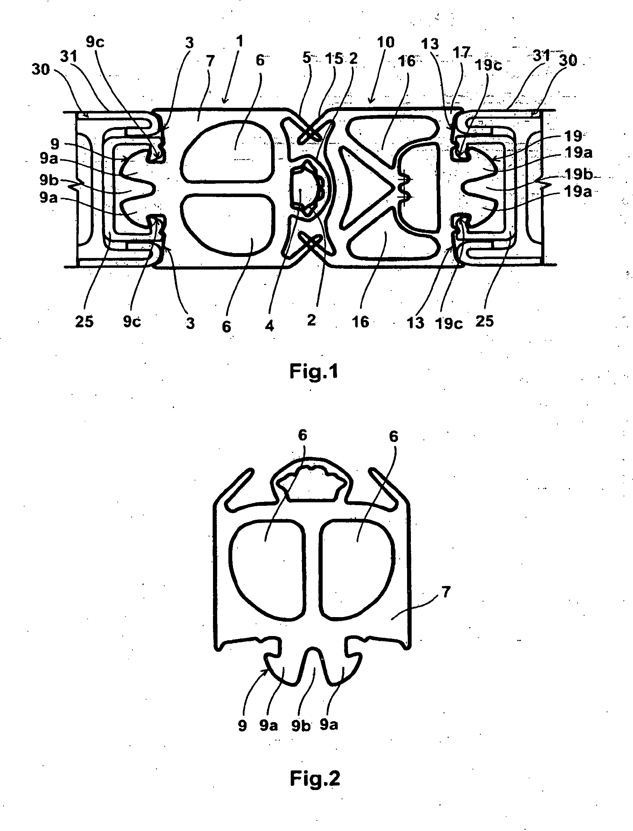

Anhand der Figuren 2 und 3 sowie der Figuren 5 und 6 soll nun die Funktionsweise der Erfindung erläutert werden.

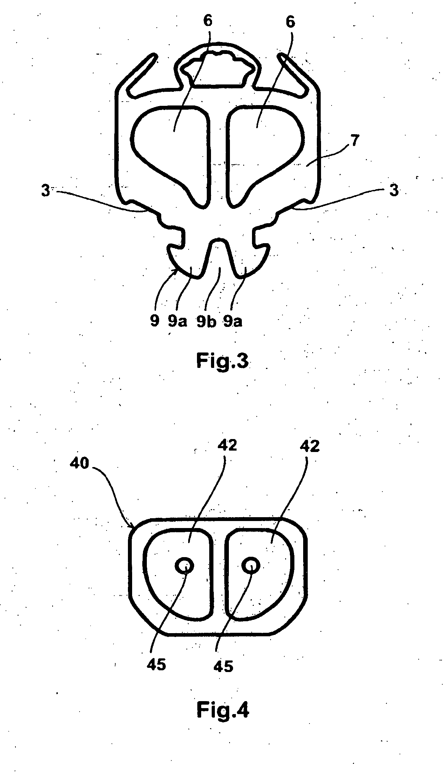

Fig. 3 zeigt beispielhaft im Querschnitt das männliche Fingerschutzprofil, wobei die Fig. 3 das Fingerschutzprofil gemäß Fig. 2 im verformten Zustand zeigt, wenn die beiden Kammern 6 in dem Profil mit Unterdruck beaufschlagt sind, und mithin sich die Kammern 6 zusammenziehen. Es ist unmittelbar erkennbar, dass bei Unterdruck in den Kammern die Wandung 3 zu beiden Seiten der Fußleiste 9 von der Fußleiste 9 bzw. der C-förmigen Schiene weggeschwenkt wird, sodass dann beim Einschieben der Fußleiste in die C-förmige Schiene 25 die Wandung 3 nicht an der Schiene 25 und auch nicht an dem Türblatt 31 anliegt; oder anders ausgedrückt, dass die beiden Wandungsflanken zu beiden Seiten der Fußleiste von der Fußleiste bzw. von der im Querschnitt C-förmigen Schiene der Tür oder des Türportals weggeschwenkt werden. Das heißt, dass die Reibung beim Einschieben des Profils in die Schiene 25 erheblich vermindert wird. Zum Verschluss der beiden Kammern 6 ist ein Verschlussstopfen 40 vorgesehen, wobei der Verschlussstopfen 40 zwei der Form der beiden Kammern nachempfundene Sockel 42 aufweist, die beim Aufsetzen des Verschlussstopfens 40 jeweils in die Kammern 6 hineinragen. Im Bereich der Kammern 6 weist der Verschlussstopfen 40 jeweils ein Ventil 45 auf, um dort eine Saugpumpe anzuschließen. Im evakuierten oder im mit Unterdruck beaufschlagten Zustand der beiden Kammern 6 wird dann das Profil mit der Fußleiste 9 in die C-förmige Schiene 25 der Tür 30 eingeschoben.

Von dem Gegenstand der Erfindung erfasst ist nicht nur eine Ausführungsform erfasst, bei der das Profil oder das Fingerschutzprofil endseitig durch einen Verschlussstopfen 40 temporär verschlossen ist, sondern auch eine Ausführungsform, bei der das Profil endseitig bereits bei der Herstellung verschlossen ist, und dem zufolge lediglich ein Ventil im Bereich der Kammern 6 angeordnet werden muss, das dem Anschluss der Saugpumpe dient.

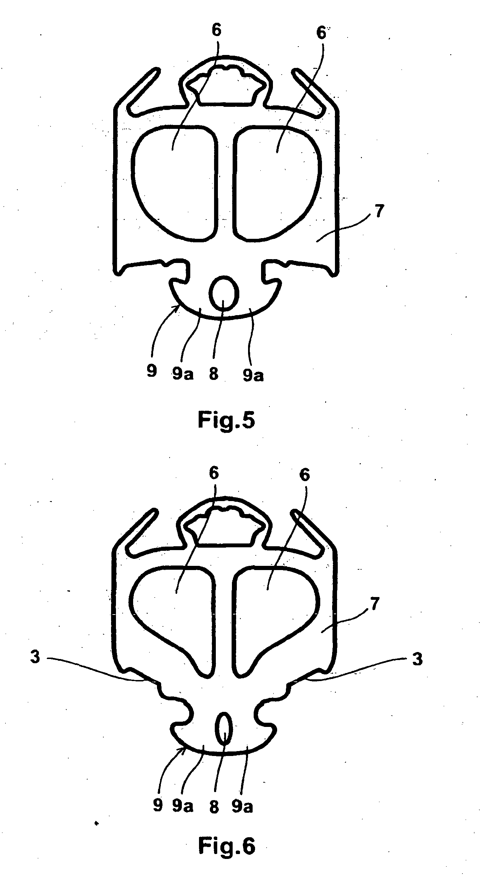

Bei der Darstellung gemäß Fig. 5 die dem Profil entspricht, wie es in Fig. 2 dargestellt ist, ist eine Kammer 8 anstelle der Kerbe vorgesehen, die mit Unterdruck beaufschlagbar ist. Das heißt, durch die Kammer 8 wird bei dieser Ausführungsform die Fußleiste in die Fußleistenelemente 9a unterteilt. Bei Beaufschlagung der Kammer 8 mit Unterdruck, das heißt, bei Zusammenziehen der Kammer 8 werden die Fußleistenelemente 9a sich im Bereich der dazwischen befindlichen Kammer 8b, also im Bereich des Hinterschnittes 9c, 19c, aufeinander zubewegen, sodass die Fußleistenelemente während des Einschubvorganges nicht mehr an der Innenseite der C-förmigen Schiene anliegen, und somit die Kraft beim Einschieben entsprechend vermindert ist. In gleicher Weise ist auch das weibliche Profil ausgebildet.

### Bezugszeichenliste:

- 1: männliches Fingerschutzprofil
- 2: vorstehende Kammer
- 3: Wandung
- 4: Schaltleiste
- 5: Dichtlippe
- 6: Kammer
- 7: Profilkörper des männl. Fingerschutzprofils
- 8: Kammer (anstelle der Kerbe)
- 9: Fußleiste
- 9a: Fußleistenelement
- 9b: Kerbe
- 9c: Hinterschnitt
- 10: weibliches Fingerschutzprofil
- 13: Wandung
- 16: Kammer
- 17: Profilkörper des weibl. Fingerschutzprofils
- 19: Fußleiste
- 19a: Fußleistenelement
- 19b: Kerbe
- 19c: Hinterschnitt
- 25: C-förmige Schiene
- 30: Tür
- 31: Türblatt
- 40: Verschlussstopfen
- 42: Sockel
- 45: Ventil

## Patentansprüche

1. Verfahren zur Anordnung eines Elastomerprofils an der Stirnseite einer Tür oder eines Türportals eines öffentlichen Personenverkehrsmittels, wobei das Profil mindestens eine Fußleiste (9, 19) zur Aufnahme durch eine C-förmige Schiene (25) der Tür oder des Türportals aufweist, und wobei das Profil (7, 17) sich längs des Profils erstreckend mindestens eine Kammer (6, 8, 16) umfasst,
**dadurch gekennzeichnet,**
**dass** beim Einschieben der Fußleiste (9, 19) in die Schiene, durch Beaufschlagung der mindestens einen Kammer (6, 8, 16) mit Unterdruck, die Reibung zwischen Profil und C-förmiger Schiene (25) der Tür oder des Türportals während des Einschubvorganges vermindert wird.

2. Verfahren zur Anordnung eines Elastomerprofils an der Stirnseite einer Tür oder eines Türportals eines öffentlichen Personehverkehrsmittels nach Anspruch 1,
**dadurch gekennzeichnet,**
**dass** bei Beaufschlagung der mindestens einen Kammer (6, 16) mit Unterdruck, die sich innerhalb des Profils im Bereich der Wandung (3, 13) befindet, die die Fußleiste (9c, 19c) aufnimmt, sich die die Fußleiste aufweisende Wandung (3, 13) des Profils von der C-förmigen Schiene (25) wegverschwenkt.

3. Verfahren zur Anordnung eines Elastomerprofils an der Stirnseite einer Tür oder eines Türportals eines öffentlichen Personenverkehrsmittels nach Anspruch 1 oder2,
**dadurch gekennzeichnet,**
**dass** bei Beaufschlägung der mindestens einen Kammer (8) mit Unterdruck, die in der Fußleiste, (9, 19) angeordnet ist, die Reibung zwischen Fußleiste und C-förmiger Schiene (25) vermindert ist.

4. Verfahren zur Anordnung eines Elastomerprofils an der Stirnseite einer Tür oder eines Türportals eines öffentlichen Personenverkehrsmittels nach einem der voranstehenden Ansprüche,
**dadurch gekennzeichnet,**
**dass** sich die mindestens eine Kammer (6, 8, 16) unter Unterdruck zusammenzieht.

## Claims

1. A method for arranging an elastomer profile on the front side of a door or of a door portal of a public passenger transportation means, wherein the profile has at least one bottom bar (9, 19) to be received by a C-shaped rail (25) of the door or of the door portal and wherein the profile (7, 17) has at least one chamber (6, 8, 16) extending along the profile,
**characterized in that**
when inserting the bottom bar (9, 19) into the rail, the friction between the profile and the C-shaped rail (25) of the door or the door profile is reduced during the insertion process by impinging the at least one chamber (6, 8, 16) with a negative pressure.

2. The method for arranging an elastomer profile on the front side of a door or of a door portal of a public passenger transportation means according to claim 1,
**characterized in that**
when impinging the at least one chamber (6, 16), located inside the profile in the area of the wall (3, 13) that receives the bottom bar (9c, 19c), with a negative pressure, the wall (3, 13) of the profile featuring the bottom bar pivots away from the C-shaped rail (25).

3. The method for arranging an elastomer profile on the front side of a door or of a door portal of a public passenger transportation means according to claim 1 or 2,
**characterized in that**
when impinging the at least one chamber (8), disposed in the bottom bar (9, 19), with negative pressure, the friction between the bottom bar and the C-shaped rail (25) is reduced.

4. The method for arranging an elastomer profile on the front side of a door or of a door portal of a public passenger transportation means according to one of the afore-mentioned claims,
**characterized in that**
the at least one chamber (6, 8, 16) contracts under negative pressure.

## Revendications

1. Procédé pour la mise en place d'un profilé en élastomère contre la face frontale d'une porte ou d'un portail d'un moyen de transport public de personnes, dans lequel le profilé comporte au moins une plinthe (9, 19) pour être engagée dans un rail (25) ayant la forme d'un C, de la porte ou du portail, et dans lequel le profil (7, 17) comporte sur sa longueur, au moins une chambre (6, 8, 16),
**caractérisé en ce que,**
le frottement entre le profil et le rail (25) ayant la forme d'un C, de la porte ou du portail est minimisé lors de l'introduction de la plinthe (9, 19) dans le rail, par la soumission de ladite au moins une chambre (6, 8, 16) à une réduction de pression.

2. Procédé pour la mise en place d'un profilé en élastomère contre la face frontale d'une porte ou d'un portail d'un moyen de transport public de personnes, selon la revendication 1,
**caractérisé en ce que,**
lors d'une soumission d'au moins une chambre (6, 16) à une réduction de pression, celle qui se situe à l'intérieur du profil, dans le secteur de la paroi (3, 13) recevant la plinthe (9c, 19c), bascule en s'éloignant du profil du rail (25) en forme de C par rapport à la paroi (3, 13) comprenant la plinthe.

3. Procédé pour la mise en place d'un profilé en élastomère contre la face frontale d'une porte ou d'un portail d'un moyen de transport public de personnes, selon les revendications 1 ou 2,
**caractérisé en ce que,**
la soumission d'au moins une chambre (8) à une réduction de pression, celle qui est ménagée dans la plinthe (9, 19) présente un frottement réduit entre la plinthe et le rail (25) en forme de C.

4. Procédé pour la mise en place d'un profilé en élastomère contre la face frontale d'une porte ou d'un portail d'un moyen de transport public de personnes, selon l'une des revendications précédentes,
**caractérisé en ce que,**
au moins une chambre (6, 8, 16) se rétracte lorsqu'elle est soumise à une réduction de la pression.
